# EUROPEAN PATENT APPLICATION

(11) **EP 4 019 242 A1**
(43) Date of publication of application: **29.06.2022**
(21) Application number: 20869880.3
(22) Date of filing: 18.09.2020
(51) Int. Cl.: B32B 5/16, B32B 5/18, B32B 27/00, C09K 3/18, B32B 7/02

(54) **FROST-RESISTANT WATER-REPELLENT FILM AND METHOD FOR MANUFACTURING SAME**

(30) Priority: 24.09.2019 JP 2019172862
(71) Applicant: Toyoda Gosei Co., Ltd., Kiyosu-shi, Aichi 452-8564 (JP)
(72) Inventor: SHIRATORI Seimei, Yokohama-shi, Kanagawa 223-8522 (JP); NAKAMURA Hiroki, Yokohama-shi, Kanagawa 223-8522 (JP); OKAWA Shintaro, Kiyosu-shi, Aichi 452-8564 (JP); ANDO Hiroaki, Kiyosu-shi, Aichi 452-8564 (JP); KITAMOTO Miki, Kiyosu-shi, Aichi 452-8564 (JP)
(74) Representative: Kramer Barske Schmidtchen Patentanwälte PartG mbB
(86) International application number: PCT/JP2020/035555
(87) International publication number: WO 2021/060202

(57) **Abstract**

The present invention pertains to: a frost-resistant water-repellent film 1 comprising a hygroscopic layer 5 provided on a substrate 3, and a water-repellent layer 7 provided on the hygroscopic layer 5, wherein the water-repellent layer 7 comprises a water-repellent layer base 9 and a water-repellent component 11 adhered to the water-repellent layer base; and a method for manufacturing the frost-resistant water-repellent film, the method including a hygroscopic layer formation step for forming the hygroscopic layer on a target surface, and a water-repellent layer formation step for forming the water-repellent layer on the hygroscopic layer, wherein the water-repellent layer formation step includes a step for adhering the water-repellent component to the water-repellent layer base.

## Description

### TECHNICAL FIELD

The present invention relates to a water-repellent film having frost resistance and a method for producing the same.

### BACKGROUND ART

Japanese Patent No. 6333454 describes a water-repellent and oil-repellent coating having a hydrophilic gel-type silica powder bonded to fluoroalkylsilane.

JP-A-2009-073877 describes a solid polyhydric alcohol composition having a frost prevention effect.

### CITATION LIST

### PATENT LITERATURE

Patent Literature 1: Japanese Patent No. 6333454
Patent Literature 2: JP-A-2009-073877

### SUMMARY OF INVENTION

### TECHNICAL PROBLEM

The water-repellent film has a problem of low resistance to frost.

Therefore, an object of the present invention described in this specification is to provide a water-repellent film having frost resistance and a method for producing the same.

Another object of the present invention described in this specification is to provide a film having both characteristics of preventing adhesion of snow and preventing formation of frost, and a method for producing the film.

### SOLUTION TO PROBLEM

The present invention is basically based on an example by which a two-layer structure of a water-repellent porous layer and a hygroscopic layer is found to have a water-repellent film having frost resistance.

The first invention disclosed in this specification relates to a water-repellent film having frost resistance. The film is a water-repellent film 1 having frost resistance and including a hygroscopic layer 5 provided on or above a substrate 3 and a water-repellent layer 7 provided on or above the hygroscopic layer 5. The water-repellent layer 7 includes a water-repellent layer substrate 9 and a water-repellent component 11 attached to the water-repellent layer substrate. Since the structure including two layers of a hygroscopic layer and a water-repellent layer is employed, a water-repellent film having frost resistance can be obtained. Examples of the water-repellent component include particles, molecules, and an oil layer.

The hygroscopic layer 5 preferably contains an antifreeze liquid component. In the case where the antifreeze liquid component is contained, the hygroscopicity can be ensured even in a cold environment. Examples of the antifreeze liquid component include one containing one kind or two kinds or more of polydimethylsiloxane, polyphenylmethylsiloxane, glycerin, ethylene glycol, polyethylene glycol, propylene glycol, polyvinyl alcohol, cellulose, an acrylic acid antifreeze liquid, and an acrylamide antifreeze liquid.

The hygroscopic layer 5 preferably contains a first PEG which is a polyethylene glycol having a weight average molecular weight of 100 or more and less than 800 and a second PEG which is a polyethylene glycol having a weight average molecular weight of 800 or more and 20,000,000 or less. A weight ratio w₁/w₂ of the first PEG to the second PEG is preferably 0.001 or more and 1,000 or less.

In one of the assumed usage environments of the film (cold district), by mixing the first PEG and the second PEG, which are liquid and solid, respectively, even in the case where the film is formed in an inclined state, it is possible to ensure hygroscopicity without dripping or the like. In the case where the film is formed on a flat surface, the second PEG is unnecessary. On the other hand, for example, in the case of forming the film on an automobile or the like, it is preferable to mix the second PEG with the first PEG so that the hygroscopic layer does not drip.

Examples of the water-repellent component 11 include water-repellent silica particles. Another example of the water-repellent component 11 is a water-repellent compound attached to the water-repellent layer substrate. The water-repellent compound is, for example, a compound having a functional group water-repellent group such as a fluorine atom, a methyl group, a fluoromethyl group, a difluoromethyl group, or a trifluoromethyl group at an end thereof.

An example of the water-repellent layer substrate 9 is a porous material. Since the surface of the water-repellent layer substrate 9 is the porous material, snow attached to the surface of the water-repellent layer cannot enter the inside and is removed. In addition, since the surface of the water-repellent layer substrate 9 is the porous material, water droplets attached to the surface of the water-repellent layer are absorbed by the hygroscopic layer, and the surface of the water-repellent layer substrate 9 can be prevented from freezing.

Examples of the surface of the substrate 3 include a polycarbonate, an acrylic resin, and a methacrylic resin. Since the film has excellent affinity with a polycarbonate, an acrylic resin, or a methacrylic resin, the film is preferably used in automobiles and aircrafts. The film is preferably used on the surface of parts related to an exterior and interior of an automobile, or on the surface of an airframe of an aircraft.

The film is preferable to further include a spacer layer 13 present between the hygroscopic layer 5 and the water-repellent layer 7. Since the spacer layer is provided, water vapor or the like can be passed well, and the hygroscopic layer can absorb moisture attached to a water-repellent layer portion. In addition, since the spacer layer is provided, water vapor generated from the hygroscopic layer can be released.

An example of the porosity of the spacer layer is 0.1% or more and 99.9% or less. The spacer layer may be a simple frame or column.

The following invention disclosed in this specification relates to a method for producing the water-repellent film having frost resistance.

The method includes a hygroscopic layer forming step of forming a hygroscopic layer on or above a target surface, and a water-repellent layer forming step of forming a water-repellent layer on or above the hygroscopic layer. The water-repellent layer forming step includes a step of attaching a water-repellent component to a water-repellent layer substrate.

### ADVANTAGEOUS EFFECTS OF INVENTION

One of the inventions described in this specification can provide a water-repellent film having frost resistance and a method for producing the same.

One of the inventions described in this specification can provide a film having both characteristics of preventing adhesion of snow and preventing formation of frost, and a method for producing the same.

### BRIEF DESCRIPTION OF DRAWINGS

[FIG. 1] FIG. 1 is a conceptual diagram illustrating a configuration example of a water-repellent film.
[FIG. 2] FIG. 2 is a photograph in place of a drawing, showing a state when the removal performance of supercooling water in Example 1 and Comparative Examples 1 and 2 is evaluated.
[FIG. 3] FIG. 3 is a photograph in place of a drawing, showing a state when snow adhesion prevention property in Examples 1, 2, and 3 is evaluated.

### DESCRIPTION OF EMBODIMENTS

Hereinafter, embodiments of the present invention will be described with reference to the drawings. The present invention is not limited to the embodiments described below, and includes embodiments appropriately modified from the embodiments described below within the scope obvious to those skilled in the art.

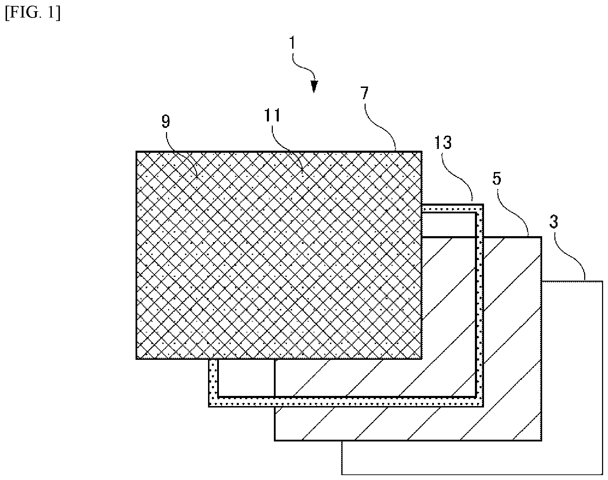

FIG. 1 is a conceptual diagram illustrating a configuration example of a water-repellent film. Hereinafter, the water-repellent film will be described. As illustrated in FIG. 1, the film includes a hygroscopic layer 5 provided on a substrate 3 and a water-repellent layer 7 provided above the hygroscopic layer 5.

Examples of the surface of the substrate 3 include a polycarbonate, an acrylic resin, and a methacrylic resin. Since the film has excellent affinity with a polycarbonate, an acrylic resin, or a methacrylic resin, the film is preferably used in automobiles and aircrafts. The film is preferably used on the surface of parts related to an exterior and interior of an automobile, or on the surface of an airframe of an aircraft. Examples of the parts related to the exterior of an automobile include a door, a vehicle body, a window, and a frame. Examples of parts related to the interior of an automobile include a cabinet, a handle, a pedal, a gear, and an inner surface portion of a vehicle body. The substrate itself may be a resin or a metal. However, in the case where the substrate is formed of a metal, the surface of the substrate is preferably coated with a resin layer containing a polycarbonate, an acrylic resin, or a methacrylic resin. The substrate may be a component part including a frame body of an aircraft or a component part including a frame body of an automobile. More preferably, by applying the film to a surface of a transmission cover for millimeter waves or LiDAR, which is provided on the exterior of an automobile, it is possible to improve sensing accuracy regardless of weather.

The hygroscopic layer 5 means a layer having hygroscopicity. The hygroscopic layer is known as described in, for example, Japanese Patent No. 6396872. Examples of the hygroscopic layer include a hygroscopic layer containing a known hygroscopic agent such as silica gel, alumina gel, molecular sieve, zeolite, and calcium chloride and a resin as a dispersion medium, a hygroscopic layer which is a microporous film carrying a hygroscopic agent, and a hygroscopic layer having a porous structure containing amorphous silica, a water-soluble resin, and a hygroscopic agent.

The hygroscopic layer 5 preferably contains an antifreeze liquid component. In the case where the antifreeze liquid component is contained, the hygroscopicity can be ensured even in a cold environment. Examples of the antifreeze liquid component include one containing one or more of polydimethylsiloxane, polyphenylmethylsiloxane, glycerin, ethylene glycol, polyethylene glycol, propylene glycol, polyvinyl alcohol, cellulose, an acrylic acid antifreeze liquid, and an acrylamide antifreeze liquid. Since these compounds and resins are known, known resins may be appropriately adopted. For example, Japanese Patent No. 3299081 describes an anti-icing paint containing: an antifreeze liquid containing, in weight basis, 250 to 300 parts of water and 5 to 10 parts of polyhydric alcohol; 10 to 50 parts of water-soluble acetate; 2.0 to 5.0 parts of water-soluble rust inhibitor; and 6 to 65 parts of water-soluble binder. In this document, the polyhydric alcohol is described as one or more selected from ethyl glycol, butyl glycol, ethylene glycol, propylene glycol, butylene glycol, polyethylene glycol, polypropylene glycol, ethyl diglycol, butyl diglycol, glycerin, and propionyl carbinol, and the binder is described as one or more resins selected from viscose, methyl cellulose, ethyl cellulose, hydroxyethyl cellulose, carboxymethyl cellulose, soluble starch, carboxymethyl starch, dialdehyde starch, polyvinyl alcohol, sodium polyacrylate, polyethylene oxide, water-soluble alkyd resin, water-soluble melamine resin, water-soluble urea resin, water-soluble phenol resin, water-soluble acrylic resin, water-soluble epoxy resin, and water-soluble polybutadiene resin. As the antifreeze liquid component in this specification, those obtained by appropriately mixing the polyhydric alcohol and the resin described in the above publication can be used.

The hygroscopic layer 5 preferably contains a first PEG which is a polyethylene glycol having a weight average molecular weight of 100 or more and less than 800 and a second PEG which is a polyethylene glycol having a weight average molecular weight of 800 or more and 20,000,000 or less.

The weight average molecular weight of the first PEG may be 100 or more and less than 400, or 150 or more and less than 300.

In particular, the second PEG may include a plurality of groups having different weight average molecular weights. The weight average molecular weight of the second PEG may be, for example, 850 or more and less than 2,000, 900 or more and less than 2,000, 950 or more and less than 1,500, 2,000 or more and less than 500,000, 2,500 or more and less than 100,000, 2,500 or more and less than 10,000, 3,000 or more and less than 6,000, 500,000 or more and 20,000,000 or less, 500,000 or more and 10,000,000 or less, 500,000 or more and 8,000,000 or less, or 1,000,000 or more and 10,000,000 or less.

The weight ratio w₁/w₂ of the first PEG to the second PEG is preferably 0.001 or more and 1,000 or less (preferably 0.01 or more and 500 or less, 0.01 or more and 100 or less, 0.1 or more and 10 or less, 0.01 or more and 1,000 or less, 0.05 or more and 100 or less, or 0.1 or more and 50 or less).

In one of the assumed usage environments of the film (cold district), by mixing the first PEG and the second PEG, which are liquid and solid, respectively, even in the case where the film is formed in an inclined state, it is possible to ensure hygroscopicity without dripping or the like. In the case where the film is formed on a flat surface, the second PEG may be unnecessary. On the other hand, for example, in the case of forming a film on a part of an automobile, a part of an airplane, or the like, it is preferable to mix the second PEG with the first PEG so that the hygroscopic layer does not drip.

The hygroscopic layer may have an appropriate thickness and concentration according to the intended use. The thickness of the hygroscopic layer is, for example, 0.1 mm or more and 1 cm or less, may be 0.5 mm or more and 5 mm or less, or may be 0.5 mm or more and 2 mm or less.

The water-repellent layer 7 means a layer having a property of repelling water. A water-repellent film and a water-repellent layer are known as described in, for example, Japanese Patent No. 6304411. For example, when about 2 µL of pure water is placed on the surface of the water-repellent layer, an angle between the water droplet and the sample surface can be evaluated by measuring the angle with a contact angle meter. An example of the contact angle meter is CA-X type manufactured by Kyowa Interface Science Co., Ltd., and the measurement may be performed in the air (about 25°C). In an initial contact angle, the contact angle is preferably 80° or more, more preferably 108° or more, and still more preferably 110° or more.

The water-repellent film in this specification is a water-repellent film having frost resistance. The frost resistance is a known performance as evaluated in, for example, Japanese Patent No. 6566945. In this specification, for frost resistance, the substrate may be cooled to -15°C in an environment with a temperature of 5°C and a relative humidity of 50%, and the change over time of frost may be observed. In addition, for example, a sample that is superior to a glass substrate in change of frost over time may be regarded to have frost resistance.

The water-repellent layer 7 includes the water-repellent layer substrate 9 and the water-repellent component 11 attached to the water-repellent layer substrate.

An example of the water-repellent layer substrate 9 is a porous material. Since the surface of the water-repellent layer substrate 9 is the porous material, snow attached to the surface of the water-repellent layer cannot enter the inside and is removed. In addition, since the surface of the water-repellent layer substrate 9 is the porous material, water droplets attached to the surface of the water-repellent layer are absorbed by the hygroscopic layer, and the surface of the water-repellent layer substrate 9 can be prevented from freezing. The porous material may have holes at random positions or may have a mesh shape. In the case where the porous material has a mesh shape, from the above viewpoint, an example of the opening of the porous material is 50 µm or more and 4,000 µm or less, may be 100 µm or more and 2,000 µm or less, may be 50 µm or more and 800 µm or less, or may be 100 µm or more and 600 µm or less. The thickness of the water-repellent layer substrate 9 is not particularly limited.

Examples of the water-repellent component include particles, molecules, and an oil layer. Examples of the water-repellent particles include water-repellent silica particles. The water-repellent silica particles refer to silica particles obtained by chemically modifying the surfaces of ordinary silica fine particles to impart water-repellency thereto. From the viewpoint of water-repellency, examples of a modifying group introduced to the surface of the silica fine particles include hydrophobic groups such as a methyl group, an ethyl group, a propyl group, a butyl group, an isopropyl group, a fluorine atom, a fluoromethyl group, a difluoromethyl group, and a trifluoromethyl group. The water-repellent silica particles are described in, for example, JP-A-H9-110414, JP-A-H9-241016, JP-A-H6-115924, and JP-A-2003-342017.

An example of an average particle size (D50) of the water-repellent silica particles is 10 nm or more and 500 nm or less, may be 30 nm or more and 400 nm or less, and may be 50 nm or more and 300 nm or less. The average particle size (D50) is a particle size of particles measured by dispersing fine particles in water and using a particle size distribution measuring apparatus based on a laser diffraction method. D50 refers to the 50th particle size when measuring the particle size of 100 samples, counting from the smallest particle size, and means the average particle size of the measurement samples. The water-repellent silica particles may be attached to the substrate in an appropriate concentration.

Another example of the water-repellent component 11 is a water-repellent compound attached to the water-repellent layer substrate. The water-repellent compound is, for example, a compound having a functional group water-repellent group such as a fluorine atom, a methyl group, a fluoromethyl group, a difluoromethyl group, or a trifluoromethyl group at an end thereof.

Another example of the water-repellent component is an oil layer having water-repellency. The oil layer can be formed by applying a water-repellent resin to the substrate. Examples of the water-repellent resin include a fluororesin and a silicone resin. Another example of the water-repellent resin is a resin such as a methacrylic resin, an acrylic resin, a urethane resin, or an epoxy resin, whose surface is made water-repellent by mixing a fluorinebased additive with the resin. A water-repellent layer can be obtained by applying an appropriate amount of water-repellent resin to a substrate and solidifying the resin.

The film is preferable to further include a spacer layer 13 present between the hygroscopic layer 5 and the water-repellent layer 7. Since the spacer layer is provided, water vapor or the like can be passed well, and the hygroscopic layer can absorb moisture attached to a water-repellent layer portion. In addition, since the spacer layer is provided, water vapor generated from the hygroscopic layer can be released. The thickness of the spacer may be appropriately adjusted from the above viewpoint. An example of the thickness of the spacer layer is 10 µm or more and 2 mm or less, may be 40 µm or more and 1 mm or less, may be 50 µm or more and 1 mm or less, may be 100 µm or more or 1 µm or less, may be 50 µm or more and 500 µm or less, or may be 100 µm or more and 400 µm or less.

An example of the porosity (opening ratio) of the spacer layer is 0.1% or more and 99.9% or less (or 1% or more and 99% or less, 3% or more and 10% or less, 3% or more and 50% or less, 5% or more and 20% or less, or 5% or more and 15% or less). The spacer layer may be a simple frame or column. The spacer layer may have a mesh shape.

Next, a method for producing a water-repellent film having frost resistance will be described. The method includes a hygroscopic layer forming step of forming a hygroscopic layer on or above a target surface, and a water-repellent layer forming step of forming a water-repellent layer on or above the hygroscopic layer.

### Hygroscopic Layer Forming Step

The hygroscopic layer forming step is a step of forming a hygroscopic layer on or above a target surface. The surface of the target constitutes the substrate. In the hygroscopic layer forming step, a coating liquid is prepared by mixing a normally liquid resin with a normally solid resin that has been liquefied by heating. Various auxiliary materials may be added to the coating liquid. The coating liquid is applied to the substrate by using an appropriate coating method according to the shape of the substrate. Examples of the coating method include spray coating, spin coating, roll coating, and dip coating.

### Water-repellent Layer Forming Step

In the water-repellent layer forming step, a water-repellent component is attached to the water-repellent layer substrate to form a water-repellent layer. In the water-repellent layer forming step, the water-repellent layer is formed on or above the hygroscopic layer. At this time, a spacer may be provided on the hygroscopic layer, and the water-repellent layer may be formed on the spacer. For each layer, the hygroscopic layer and the spacer layer, and the spacer layer and the water-repellent layer may be bonded to each other by using, for example, a UV curable resin. Adjacent layers may be bonded by using a known adhesive.

The film has water-repellency, frost resistance, and snow removal performance. Therefore, these performances can be exhibited by forming a film, for example, on a surface of a part related to an exterior and interior of an automobile, a surface of an aircraft part, or a surface of a building.

### Evaluation of Water-repellency

The water-repellency may be evaluated by evaluating a contact angle and a sliding angle.

### Test for Supercooling Water Resistance

As for the supercooling water resistance, supercooling water (-1°C, 10 µL) may be dropped from a height of 5 cm onto a substrate inclined at 20°, and the behavior thereof may be observed.

### Evaluation of Frost Resistance

For frost resistance, the substrate may be cooled to -15°C in an environment with a temperature of 5°C and a relative humidity of 50%, and the change over time of frost may be observed.

### Evaluation of Snow Adhesion Prevention Performance

A substrate inclined at 70° may be placed in an artificial snowfall device (temperature: -15°C, snow depth: 4 cm/1 hour (1 mm/1 hour in terms of water)), and a change over time may be observed.

### Example 1

As a substrate, a glass substrate (manufactured by Matsunami Glass Ind., Ltd.) having a size of 2.5 cm × 7.6 cm was used. Polyethylene glycol (PEG4M, manufactured by Wako Pure Chemical Industries, Ltd.) having a weight average molecular weight of 4,000,000 and heated to 150°C was mixed with polyethylene glycol (PEG200, manufactured by Wako Pure Chemical Industries, Ltd.) having a weight average molecular weight of 200 while stirring at a weight ratio of 10:1. Thus, a mixed liquid was obtained. Onto the glass substrate was uniformly applied 2 g of the mixed liquid. As a result, a hygroscopic layer having a thickness of about 1 mm was obtained on the substrate. A polyester mesh (manufactured by Clever Co., Ltd.) having an opening of 174 µm and a yarn system of 80 µm was prepared as a substrate. Perfluoroalkyl group-containing silane (C6) (manufactured by Gelest Inc.), silica (manufactured by Nippon Aerosil Co., Ltd.), and ethanol were mixed at a weight ratio of 1 weight%, 1.5 weight%, and 97.5 weight% to prepare a silica fine particle dispersion. The silica fine particle dispersion was spray-coated on the substrate to attach the silica fine particles to the substrate. Thus, a water-repellent layer was formed.

A PET film (manufactured by Toyobo Co., Ltd.) having a thickness of 180 µm was processed into the same shape as an outer frame of the substrate to form a frame body having a width of 3 mm. An ultraviolet curable resin was applied to an upper surface and a lower surface of the frame body. The frame body coated with the ultraviolet curable resin was mounted on the hygroscopic layer. The water-repellent layer was mounted on an upper portion of the frame body. Thereafter, the substrate was irradiated with ultraviolet rays to cure the ultraviolet curable resin.

Thus, a film was formed on the glass substrate.

### [Comparative Example]

A glass substrate itself was used as Comparative Example 1.

A film was formed in the same manner as in Example 1 except that a water-repellent layer was not provided (Comparative Example 2).

The physical properties of Example 1 and Comparative Examples 1 and 2 were evaluated.

The measurement results of a contact angle and a sliding angle are shown in Table 1.

**[Table 1]**

| Table 1: Measurement results of contact angle and sliding angle | | |
|---|---|---|
| | Contact angle (°) | Sliding angle (°) |
| Comparative Example 1 | 7.9 | No Sliding |
| Comparative Example 2 | 7.4 | No Sliding |
| Example 1 | 150 | 11 |

As shown in Table 1, Comparative Examples 1 and 2 exhibited hydrophilicity, whereas Example 1 exhibited super water-repellency.

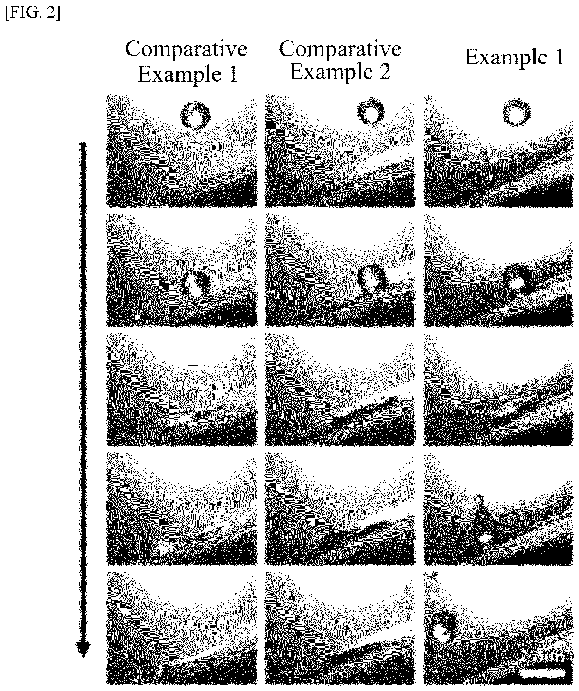

Next, the removal performance of the supercooling water in Example 1 and Comparative Examples 1 and 2 was observed. The results are shown in FIG. 2. As shown in FIG. 2, Example 1 has the performance of removing the supercooling water. It is considered that this is because an air layer is formed between the water-repellent layer and the hygroscopic layer by the spacer layer, and water droplets do not penetrate through the water-repellent layer.

As the spacer, a processed PET film having a thickness of 180 µm was used. Although the spacer does not have to be present, it is preferable that the water-repellent layer and the hygroscopic layer can be separated from each other. Therefore, it is considered that the presence of the spacer is better. It is considered that the thickness of the spacer layer is preferably about 0.1 µm or more and 1 cm or less, and it is considered that the thickness may be appropriately adjusted within this range. In addition, although a PET film is used as a material, any material may be used as long as the layer functions as a spacer.

### [Examples 2 and 3]

### Examination of Mesh Diameter

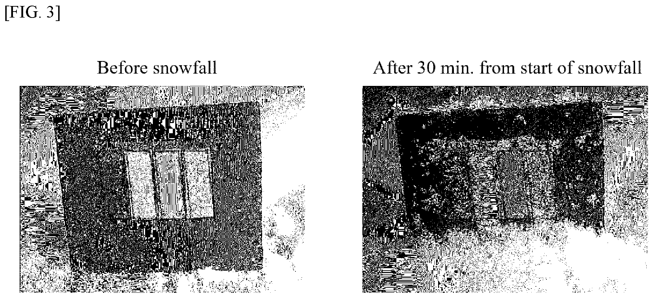

Films were formed in the same manner as in Example 1 except that a polyester mesh having an opening of 352 µm and a yarn system of 71 µm (Example 2) and a polyester mesh having an opening of 1293 µm and a yarn system of 400 µm (Example 3) were used. The snow adhesion prevention property in Examples 1, 2, and 3 was evaluated. The results are shown in FIG. 3.
(a) of FIG. 3 shows a state of a film before snowfall, and (b) of FIG. 3 shows a state of a film after 30 minutes from a start of snowfall. In FIG. 3, Comparative Example 1 and Examples 1 to 3 are shown from the left. As shown in FIG. 3, in Examples 1 and 2, the snow adhesion prevention property was very high (A). On the other hand, in Example 3, the snow adhesion prevention property was higher than usual (B). It can be seen that the smaller the opening and the yarn system are, the higher the snow adhesion prevention property is.

### [Examples 4 to 13]

### Study of Resin Constituting Hygroscopic Layer

Films were formed in the same manner as in Comparative Example 2 except that the resin component for obtaining a hygroscopic layer was changed to compositions shown in Table 2. The frost prevention performance of the obtained film is also shown in Table 2.

**[Table 2]**

| Table 2 Resin features and frost prevention performance (time) | | | | | | |
|---|---|---|---|---|---|---|
| | Weight ratio | | | | | Frost prevention performance (h) |
| | PEG200 | PEG1000 | PEG4000 | PEG4000000 | Glycerin | |
| Comparative Example 1 | | | | | | 0.17 |
| Comparative Example 2 | 1 | 0 | 0 | 0.1 | 0 | 20 |
| Example 4 | 1 | 5 | 5 | 0.5 | 0 | 2 |
| Example 5 | 1 | 10 | 10 | 1 | 0 | 2 |
| Example 6 | 5 | 0 | 5 | 1 | 0 | 5 |
| Example 7 | 5 | 5 | 10 | 0.1 | 0 | 4 |
| Example 8 | 5 | 10 | 0 | 0.5 | 0 | 12 |
| Example 9 | 10 | 0 | 10 | 0.5 | 0 | 8 |
| Example 10 | 10 | 5 | 0 | 1 | 0 | 16 |
| Example 11 | 10 | 10 | 5 | 0.1 | 0 | 20 |
| Example 12 | | | | 0.1 | 1 | 5 |
| Example 13 | 0.1 | 10 | 1 | 0.1 | 0 | 5 |
| Example 1 | 1 | 0 | 0 | 0.1 | 0 | 20 |

From this, it can be seen that the higher the ratio of the PEG 200 is, the higher the frost prevention performance is.

This is because the hygroscopicity is improved as the molecular weight of PEG is decreased.

### INDUSTRIAL APPLICABILITY

The present invention relates to a water-repellent film having frost resistance and a method for producing the same, and can be used in various industries in which snow and frost damage occur. Examples of such industries include aircraft industry and automobile industry.

### REFERENCE SIGNS LIST

- 1: Water-repellent film
- 3: Substrate
- 5: Hygroscopic layer
- 7: Water-repellent layer
- 9: Water-repellent layer substrate
- 11: Water-repellent component
- 13: Spacer layer

## Claims

1. A water-repellent film (1) having frost resistance, comprising:
a hygroscopic layer (5) provided on or above a substrate (3) and
a water-repellent layer (7) provided on or above the hygroscopic layer 5, wherein
the water-repellent layer (7) comprises a water-repellent layer substrate (9) and a water-repellent component (11) attached to the water-repellent layer substrate.

2. The film according to Claim 1, wherein the hygroscopic layer (5) comprises an antifreeze liquid component.

3. The film according to Claim 2, wherein the antifreeze liquid component comprises one kind or two kinds or more of polydimethylsiloxane, polyphenylmethylsiloxane, glycerin, ethylene glycol, polyethylene glycol, propylene glycol, polyvinyl alcohol, cellulose, an acrylic acid antifreeze liquid, and an acrylamide antifreeze liquid.

4. The film according to Claim 1, wherein
the hygroscopic layer (5) comprises:
a first PEG that is a polyethylene glycol having a weight average molecular weight of 100 or more and less than 800; and
a second PEG that is a polyethylene glycol having a weight average molecular weight of 800 or more and 20,000,000 or less, and
a weight ratio w₁/w₂ of the first PEG to the second PEG is 0.001 or more and 1,000 or less.

5. The film according to Claim 1, wherein the water-repellent component (11) comprises water-repellent silica particles.

6. The film according to Claim 1, wherein the water-repellent component (11) comprises a water-repellent compound attached to the water-repellent layer substrate.

7. The film according to Claim 1, wherein the water-repellent layer substrate (9) is a porous material.

8. The film according to Claim 1, wherein the substrate (3) has a surface comprising a polycarbonate, an acrylic resin, and a methacrylic resin.

9. The film according to Claim 7, further comprising a spacer layer (13) present between the hygroscopic layer (5) and the water-repellent layer (7).

10. The film according to Claim 9, wherein the spacer layer has a porosity of 0.1% or more and 99.9% or less.

11. The film according to any one of Claims 1 to 10, which is to be formed on a surface of parts related to an exterior and interior of an automobile, or on a surface of an airframe of an aircraft.

12. A method for producing a water-repellent film having frost resistance,
the method comprising:
a hygroscopic layer forming step of forming a hygroscopic layer on or above a target surface; and
a water-repellent layer forming step of forming a water-repellent layer on or above the hygroscopic layer, wherein
the water-repellent layer forming step comprises a step of attaching a water-repellent component to a water-repellent layer substrate.
